# EUROPEAN PATENT APPLICATION

(11) **EP 4 733 122 A1**
(43) Date of publication of application: **29.04.2026**
(21) Application number: 25208109.6
(22) Date of filing: 10.10.2025
(51) Int. Cl.: B60L 15/20, B60K 1/00, B60K 20/06, B60W 50/08, B60W 50/10

(54) **BATTERY ELECTRIC VEHICLE AND NON-TRANSITORY STORAGE MEDIUM**

(30) Priority: 24.10.2024 JP 2024187586
(71) Applicant: TOYOTA JIDOSHA KABUSHIKI KAISHA, Toyota-shi, Aichi-ken 471-8571 (JP)
(72) Inventor: IMAMURA, Tatsuya, TOYOTA-SHI, AICHI-KEN, 471-8571 (JP); ISAMI, Yoichiro, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP)
(74) Representative: Cabinet Beau de Loménie

(57) **Abstract**

A battery electric vehicle (100) having a plurality of modes in which output control of a motor (4F; 4R) with respect to an operation input from a driver is different includes a control device (101). The modes include a manual operation mode in which output characteristics of the motor (4F; 4R) upon acceleration are switchable in multiple stages through operation of a pair of right and left switches (14R; 14L) provided at a steering wheel (30) or a steering column. The control device (101) is configured to execute mode switching between the manual operation mode and another mode by two or more operation interfaces being operated without at least one of the pair of right and left switches (14R; 14L) being operated.

## Description

### BACKGROUND OF THE INVENTION

### 1. Field of the Invention

The present disclosure relates to a battery electric vehicle having a plurality of modes in which output control of a motor with respect to an operation input of a driver is different, and specifically relates to a battery electric vehicle having a manual operation mode configured to be able to switch output characteristics of the motor in multiple stages in accordance with operation of a pair of right and left switches provided at a steering wheel or a steering column. Further, the present disclosure relates to a non-transitory storage medium storing instructions that are executable by a suitable in-vehicle computer in a battery electric vehicle including a pair of right and left switches provided at a steering wheel or a steering column.

### 2. Description of Related Art

Japanese Patent No. 7501228 (JP 7501228 B) discloses a technique of simulating a virtual engine and a virtual manual transmission by adding a shift lever and a clutch pedal to a battery electric vehicle (BEV) and controlling a motor by operation signals from the added devices. In this related art, the mode can be switched by operation of a driver between a mode in which output characteristics of the motor are controlled in accordance with operation of the shift lever and the clutch pedal by the driver and a mode in which an output of the motor is controlled without the need of operation of the shift lever and the clutch pedal by the driver. In the related art, as specific examples of a mode switching device to be operated by the driver, a switch button provided in an instrument panel inside a vehicle and a speech recognition device that recognizes the driver are exemplified.

### SUMMARY OF THE INVENTION

What is most concerned in mode switching is unintended mode switching by erroneous operation. Particularly, when unintended mode switching is performed during traveling of the vehicle, there is a possibility that the driver may be puzzled or confused by a sudden change of output characteristics of the motor. While switching by the switch button and the speech recognition device as in the related art is simple, there is a possibility that the mode may be inadvertently switched by erroneous operation.

Further, there is also a technique of switching output characteristics of the motor using a pair of right and left switches provided at a steering wheel or a steering column, for example, a paddle switch in place of the shift lever and the clutch pedal in the related art described above. While it is also possible to provide operation patterns for switching the mode to this paddle switch, inadvertent mode switching by erroneous operation of the paddle switch can occur.

The present disclosure provides a technique of reducing a possibility of inadvertent mode switching by erroneous operation when a pair of right and left switches provided at a steering wheel or a steering column is used to switch output characteristics of a motor in multiple stages.

A first aspect of the present disclosure is a battery electric vehicle including a control device. The battery electric vehicle has a plurality of modes in which output control of a motor with respect to an operation input from a driver is different. The modes include a manual operation mode in which output characteristics of a motor upon acceleration are switchable in multiple stages through operation of a pair of right and left switches provided at a steering wheel or a steering column. The control device is configured to execute mode switching between the manual operation mode and another mode by two or more operation interfaces being operated without at least one of the pair of right and left switches being operated.

In the above-described first aspect, each of the pair of right and left switches is an operation interface, and one of the pair of right and left switches may be used for mode switching.

In the above-described first aspect, the two or more operation interfaces may be operation interfaces that are operable while the driver puts one hand on the steering wheel.

In the above-described first aspect, the two or more operation interfaces may include one of the pair of right and left switches.

In the above-described first aspect, the two or more operation interfaces may be the one of the pair of right and left switches and an operation interface that is operable with the other hand different from the hand that operates the one of the pair of right and left switches.

In the above-described first aspect, the control device may be configured to execute the mode switching by the one of the pair of right and left switches and an operation interface other than the pair of right and left switches being operated through a predetermined process.

In the above-described first aspect, operation order of the two or more operation interfaces may be common between modes to be switched.

In the above-described first aspect, the modes may include a regenerative characteristics variable mode in which regenerative characteristics of the motor upon deceleration are switchable in multiple stages through operation of the pair of right and left switches.

In the above-described first aspect, the pair of right and left switches may be a paddle switch.

A second aspect of the present disclosure is a non-transitory storage medium storing instructions that are executable by a computer mounted on a battery electric vehicle including a pair of right and left switches provided at a steering wheel or a steering column, the instructions causing the computer to execute functions. The functions include making a plurality of modes selectable in a battery electric vehicle, the modes being modes in which output control of a motor with respect to an operation input from a driver is different, the modes including a manual operation mode in which output characteristics of the motor upon acceleration are switchable in multiple stages through operation of the pair of right and left switches, and executing mode switching between the manual operation mode and another mode when two or more operation interfaces are operated without at least one of the pair of right and left switches being operated.

According to the first aspect and the second aspect of the present disclosure, while operation of at least two or more operation interfaces is used as a condition for switching a mode, at least one of a pair of right and left switches provided at a steering wheel or a steering column is not used to switch the mode. This can reduce a possibility of inadvertent mode switching by erroneous operation while implementing switching of output characteristics of the motor in multiple stages through operation of the pair of right and left switches in the manual operation mode.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view illustrating a configuration of a battery electric vehicle according to the present disclosure;
FIG. 2 is a view illustrating a configuration of a control device related to output control of a motor;
FIG. 3 is a view for describing a first embodiment of operation interfaces to be used to switch a mode;
FIG. 4 is a view for describing a second embodiment of operation interfaces to be used to switch a mode;
FIG. 5 is a view for describing a third embodiment of operation interfaces to be used to switch a mode;
FIG. 6 is a view for describing a fourth embodiment of operation interfaces to be used to switch a mode;
FIG. 7 is a view for describing a fifth embodiment of operation interfaces to be used to switch a mode;
FIG. 8 is a view for describing a sixth embodiment of operation interfaces to be used to switch a mode;
FIG. 9 is a view for describing a seventh embodiment of an operation interface to be used to switch a mode; and
FIG. 10 is a view for describing an eighth embodiment of operation interfaces to be used to switch a mode.

### DETAILED DESCRIPTION OF EMBODIMENTS

### 1. Configuration of Power System of Battery Electric Vehicle

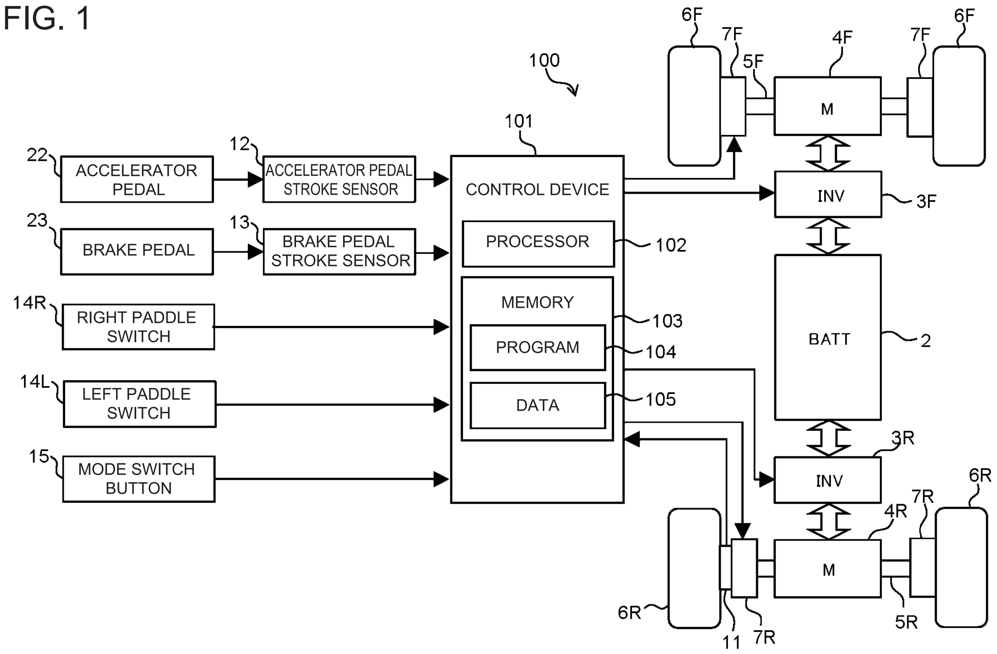

FIG. 1 is a view schematically illustrating a configuration of a battery electric vehicle 100 according to embodiments of the present disclosure. First, a configuration of a power system of the battery electric vehicle 100 will be described with reference to FIG. 1.

The battery electric vehicle 100 includes two electric motors (M) 4F, 4R on a front side and a rear side as a power source for traveling. Hereinafter, the electric motor will be simply referred to as a motor. The motors 4F, 4R are, for example, three-phase alternating-current motors. The front motor 4F is connected to a front drive shaft 5F that drives front wheels 6F. The rear motor 4R is connected to a rear drive shaft 5R that drives rear wheels 6R. The front wheels 6F are suspended to right and left electronically-controlled front suspensions 7F that are independent from each other. The rear wheels 6R are suspended to right and left electronically-controlled rear suspensions 7R that are independent from each other.

Inverters (INV) 3F, 3R are respectively attached to the front motor 4F and the rear motor 4R. Each of the front inverter 3F and the rear inverter 3R is connected to a battery (BATT) 2. The battery 2 stores electric energy for driving the motors 4F, 4R. In other words, the battery electric vehicle 100 is a battery electric vehicle (BEV) that travels using the electric energy stored in the battery 2. For example, the inverters 3F, 3R are voltage-type inverters, and control the torques of the motors 4F, 4R by PWM control.

### 2. Configuration of Control System of Battery Electric Vehicle

Subsequently, a configuration of a control system of the battery electric vehicle 100 will be described with reference to FIG. 1.

The battery electric vehicle 100 includes a control device 101. The control device 101 is connected to sensors mounted on the battery electric vehicle 100 and equipment to be controlled through an in-vehicle network. The control device 101 includes at least a processor (processing circuit) 102 and a memory 103. The memory 103 includes an RAM that temporarily records data and an ROM that stores programs 104 that are executable in the processor 102 and various kinds of data 105 related to the programs. The program 104 includes a plurality of instructions. The processor 102 retrieves the programs 104 and the data 105 from the memory 103 and executes them, and generates control signals based on signals acquired from the sensors. The number of the processors 102 and the memories 103 included in the control device 101 may be one or more than one.

The control device 101 performs various kinds of control in the battery electric vehicle 100. Control of the battery electric vehicle 100 by the control device 101 is implemented by one or more programs 104 being retrieved from the memory 103 and executed by the processor 102.

The control of the battery electric vehicle 100 by the control device 101 includes motor output control of controlling outputs of the motors 4F, 4R. In the motor output control, the control device 101 can control the motors 4F, 4R in a plurality of modes. Modes that can be selected in the control device 101 include an automatic control mode and a manual operation mode. The automatic control mode is a mode in which output characteristics of the motors 4F, 4R are controlled to be normal output characteristics in response to an output request from a driver. The manual operation mode is a mode for causing the battery electric vehicle 100 to operate as in a manual transmission vehicle (MT vehicle).

The battery electric vehicle 100 includes a vehicle speed sensor 11. At least one of vehicle wheel speed sensors (not illustrated) that are provided at right and left front wheels 6F and right and left rear wheels 6R is used as the vehicle speed sensor 11.

The battery electric vehicle 100 includes an accelerator pedal stroke sensor 12. The accelerator pedal stroke sensor 12 is provided at an accelerator pedal 22 and outputs a signal indicating a stepping amount of the accelerator pedal 22, that is, an accelerator operation amount.

The battery electric vehicle 100 includes a brake pedal stroke sensor 13. The brake pedal stroke sensor 13 is provided at a brake pedal 23 and outputs a signal indicating a stepping amount of the brake pedal 23, that is, a brake operation amount.

Further, the battery electric vehicle 100 includes a pair of right and left paddle switches 14R, 14L. The paddle switches 14R, 14L are attached to a steering wheel or a steering column. The left paddle switch 14L and the right paddle switch 14R can be independently operated. The left paddle switch 14L emits a signal by being pulled toward the driver, and the right paddle switch 14R also emits a signal by being pulled toward the driver. The paddle switches 14L, 14R are used to switch output characteristics of regenerative characteristics of the motors 4F, 4R in the automatic control mode, that is, output characteristics of regenerative torque with respect to a rotation speed. In the battery electric vehicle 100, the regenerative characteristics of the motors 4F, 4R can be made fixed or can be switched in multiple stages. In a mode in which the regenerative characteristics are variable, regenerative power is increased by one stage by the right paddle switch 14R being pulled, and the regenerative power is decreased by one stage by the left paddle switch 14L being pulled upon deceleration of the battery electric vehicle 100, that is, upon accelerator off.

The paddle switches 14L, 14R are used also in the manual operation mode. In the manual operation mode, the output characteristics of the motors 4F, 4R upon acceleration and deceleration can be switched in multiple stages through operation of the paddle switches 14L, 14R. When the right paddle switch 14R is pulled, the output characteristics of the motors 4F, 4R are switched so as to reproduce a torque change when shift-up is performed in the MT vehicle. When the left paddle switch 14L is pulled, the torque of the motors 4F, 4R is controlled so as to reproduce a torque change when shift-down is performed in the MT vehicle. Note that the paddle switches may be changed to a pair of right and left button switches provided on a front side or a back side of the steering wheel.

The battery electric vehicle 100 includes a mode switch button 15. The mode switch button 15 is an operation interface for switching the mode between the manual operation mode and the automatic control mode through operation of the driver. The mode switch button 15 is constituted as a momentary switch, and a signal is emitted every time the mode switch button 15 is pressed. However, an interlock is applied to the mode switch button 15 such that the mode is not switched only through the operation of the mode switch button 15.

### 3. Output Control of Motor

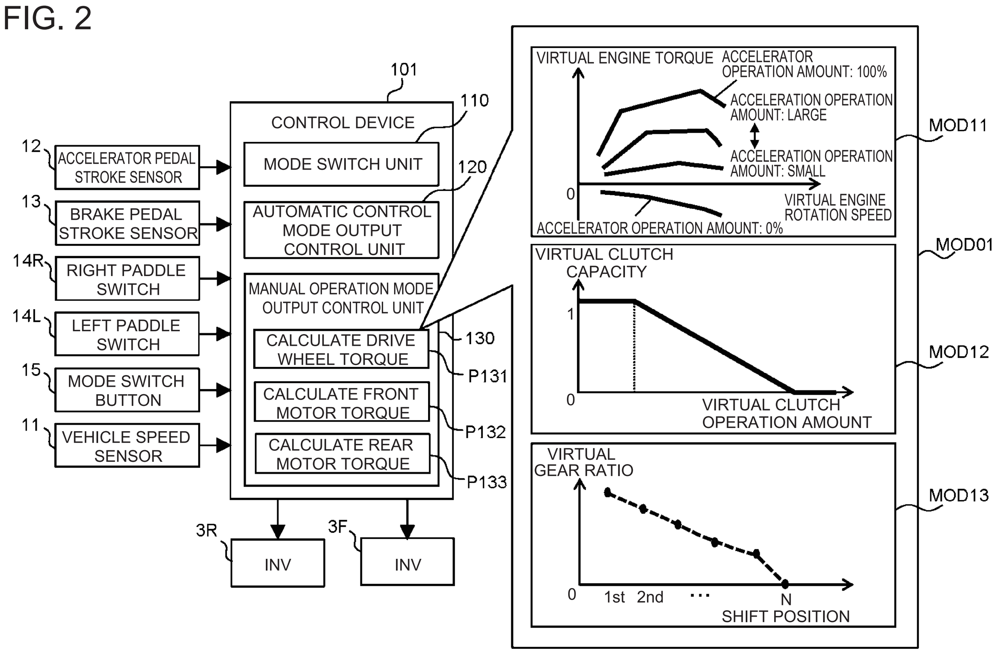

FIG. 2 is a view illustrating a configuration of the control device 101 related to output control of the motors 4F, 4R. The control device 101 has functions as a mode switch unit 110, an automatic control mode output control unit 120, and a manual operation mode output control unit 130. These functions are implemented by one or more programs 104 for motor control stored in the memory 103 being executed by the processor 102.

The mode switch unit 110 switches a mode of output control of the motors 4F, 4R with respect to an operation input from the driver. The modes to which the mode can be switched by the mode switch unit 110 are the automatic control mode and the manual operation mode described above. Mode switching by the mode switch unit 110 is performed in conjunction with operation of two operation interfaces which will be described later.

When the mode is switched to the automatic control mode by the mode switch unit 110, the control device 101 functions as the automatic control mode output control unit 120. The automatic control mode output control unit 120 acquires a vehicle speed from a signal of the vehicle speed sensor 11 and acquires an accelerator operation amount from a signal of the accelerator pedal stroke sensor 12. The automatic control mode output control unit 120 has a motor torque map including the accelerator operation amount and the vehicle speed as parameters. The automatic control mode output control unit 120 inputs the vehicle speed and the accelerator operation amount to the motor torque map and controls the inverters 3F, 3R to cause the motors 4F, 4R to generate torque obtained by the motor torque map.

When the mode is switched to the manual operation mode by the mode switch unit 110, the control device 101 functions as the manual operation mode output control unit 130. The manual operation mode output control unit 130 executes processing P131 for calculating torque to be generated at a drive wheel. Further, the manual operation mode output control unit 130 executes processing P132 and processing P133. The processing P132 is processing for calculating torque to be generated by the front motor 4F, and the processing P133 is processing for calculating torque to be generated by the rear motor 4R. The processing P132 and the processing P133 are executed in accordance with the drive wheel torque calculated in the processing P130 and torque distribution between the front wheel 6F and the rear wheel 6R.

A vehicle model MOD01 is used to calculate the drive wheel torque in the processing P131. The vehicle model MOD01 includes an engine model MOD11, a clutch model MOD12, and a transmission model MOD13. An engine to be virtually implemented by the vehicle model MOD01 will be referred to as a virtual engine, an automatic clutch to be virtually implemented will be referred to as a virtual automatic clutch, and a manual transmission to be virtually implemented will be referred to as a virtual manual transmission. In the engine model MOD11, the virtual engine is modeled. In the clutch model MOD12, the virtual automatic clutch is modeled. In the transmission model MOD13, the virtual manual transmission is modeled.

In the engine model MOD11, a relationship between a virtual engine rotation speed and virtual engine torque is specified for each accelerator operation amount. Characteristics assuming a gasoline engine or characteristics assuming a diesel engine can be set as rotation speed-torque characteristics of the engine model MOD11. Further, characteristics assuming a naturally aspirated engine or characteristics assuming a supercharged engine can be set as the rotation speed-torque characteristics. The virtual engine torque calculated in the engine model MOD11 is input to the clutch model MOD12. Note that when the virtual engine rotation speed is decreased to equal to or lower than a predetermined engine stall speed, the virtual engine torque is set at zero after fluctuation in an extremely short period, and the virtual engine rotation speed is also decreased to zero.

In the clutch model MOD12, a virtual clutch capacity is provided to a virtual clutch operation amount. The virtual clutch operation amount is basically set at zero %. When a signal is input from the left paddle switch 14L or the right paddle switch 14R, the virtual clutch operation amount is temporarily set at 100%. The virtual clutch capacity when the virtual clutch operation amount is 100% is zero. In this event, the virtual automatic clutch is completely released in the clutch model MOD12, and transmission of the virtual engine torque from the virtual engine to the virtual manual transmission is blocked. Thereafter, the virtual clutch operation amount is returned from a state of 100%, and a state of the virtual automatic clutch changes from a released state to a half-engaged state at a clutch engagement point. By this means, the virtual clutch capacity starts to increase, and transmission of the virtual engine torque from the virtual engine to the virtual manual transmission is started in accordance with the increase of the virtual clutch capacity. Then, when the virtual clutch capacity becomes equal to or greater than the virtual engine torque, the virtual automatic clutch is put into an engaged state, and all the virtual engine torque output from the virtual engine is input to the virtual manual transmission.

In the transmission model MOD13, a virtual shift position is switched in response to input of a signal from the left paddle switch 14L or the right paddle switch 14R. The virtual shift position is increased by one stage every time the signal from the right paddle switch 14R is input, and the virtual shift position is decreased by one stage every time the signal from the left paddle switch 14L is input. For example, a virtual gear ratio is set for each virtual shift position from a first gear to a sixth gear. The virtual transmission torque is calculated using the virtual gear ratio calculated in the transmission model MOD13 and the virtual clutch torque input from the clutch model MOD12. The virtual clutch torque is zero when a clutch pedal stroke is equal to or greater than the clutch engagement point, and if the clutch pedal stroke becomes smaller than the clutch engagement point, the virtual clutch torque increases from zero to the virtual engine torque in accordance with decrease of the clutch pedal stroke.

The virtual transmission torque is virtual torque to be output from the virtual manual transmission. The vehicle model MOD01 calculates drive wheel torque from the virtual transmission torque and a reduction ratio. The drive wheel torque is a sum of torque that acts on the right and left front wheels 6F and the right and left rear wheels 6R.

In the processing P132, torque of the front motor 4F is calculated by multiplying the drive wheel torque calculated in the processing P131 by a torque distribution rate to the front wheel 6F and a reduction ratio from an output shaft of the front motor 4F to the front wheel 6F. The control device 101 controls the front inverter 3F to cause the front motor 4F to generate the torque calculated in the processing P132. In the processing P133, torque of the rear motor 4R is calculated by multiplying the drive wheel torque calculated in the processing P131 by a distribution rate to the rear wheel 6R and a reduction ratio from an output shaft of the rear motor 4R to the rear wheel 6R. The control device 101 controls the rear inverter 3R to cause the rear motor 4R to generate the torque calculated in the processing P133.

### 4. Configuration of Operation Interface for Mode Switching and Operation Method Thereof

### 4-1. First Embodiment

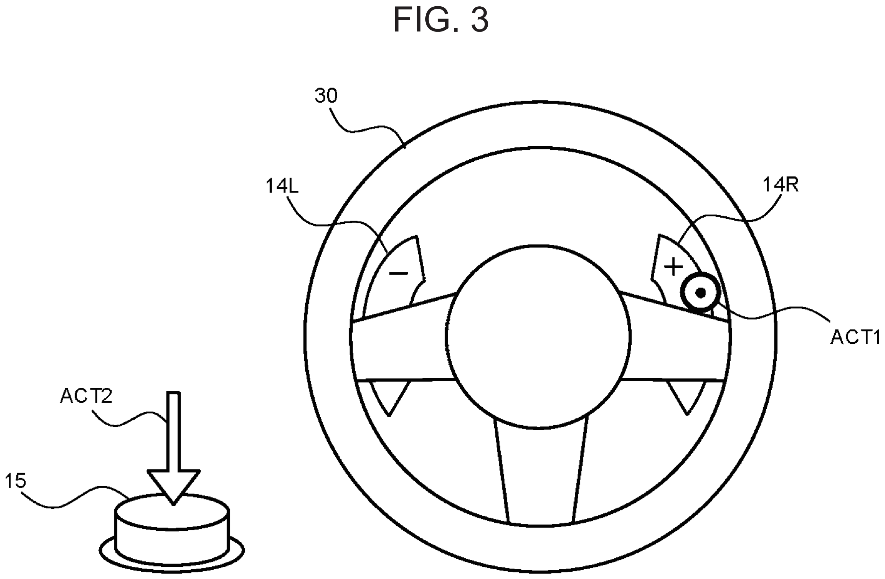

FIG. 3 illustrates a first embodiment of operation interfaces to be used for switching between the automatic control mode and the manual operation mode. Two operation interfaces are used to switch the mode. One of the operation interfaces for mode switching is the mode switch button 15. In the first embodiment, the mode switch button 15 is constituted as a physical button provided at a center console or a dashboard. The mode switch button 15 is provided on the left side of the steering wheel 30.

In the first embodiment, the right paddle switch 14R is used as the other operation interface for mode switching. By using the right paddle switch 14R as one of the operation interfaces for mode switching, the driver can operate the mode switch button 15 with the finger of the left hand while operating the right paddle switch 14R with the second to the fourth fingers of the right hand while putting the right hand on the steering wheel 30.

An interlock is applied between the right paddle switch 14R and the mode switch button 15. The driver pulls the right paddle switch 14R toward himself/herself (ACT1) and presses the mode switch button 15 (ACT2). As a result of these kinds of operation being performed in a predetermined manner, switching from the automatic control mode to the manual operation mode or from the manual operation mode to the automatic control mode is implemented. Mode switching through the operation of the right paddle switch 14R and the mode switch button 15 can be also performed during traveling of the vehicle.

Examples of a specific manner of the above-described two kinds of operation ACT1, ACT2 can include the following. Note that operation order of the operation interfaces is common between switching from the automatic control mode to the manual operation mode and switching from the manual operation mode to the automatic control mode.

Example 1. The operation ACT2 is executed within a predetermined period after the operation ACT1 is executed. In other words, the mode switch button 15 is pressed within a predetermined period after the right paddle switch 14R is pulled toward the driver.

Example 2. The operation ACT1 is executed within a predetermined period after the operation ACT2 is executed. In other words, the right paddle switch 14R is pulled toward the driver within a predetermined period after the mode switch button 15 is pressed.

Example 3. The operation ACT2 is executed while the operation ACT1 is executed. In other words, the mode switch button 15 is pressed while the right paddle switch 14R is pulled toward the driver.

In this manner, in the present embodiment, while operation of the two operation interfaces including the right paddle switch 14R is set as a condition for switching the mode, the left paddle switch 14L is not used to switch the mode. This makes it possible to reduce a possibility of inadvertent mode switching by erroneous operation of the paddle switches 14L, 14R that are also used in the regenerative characteristics variable mode while implementing switching of the output characteristics of the motors 4F, 4R in multiple stages through operation of the right and left paddle switches 14L, 14R in the manual operation mode.

### 4-2. Second Embodiment

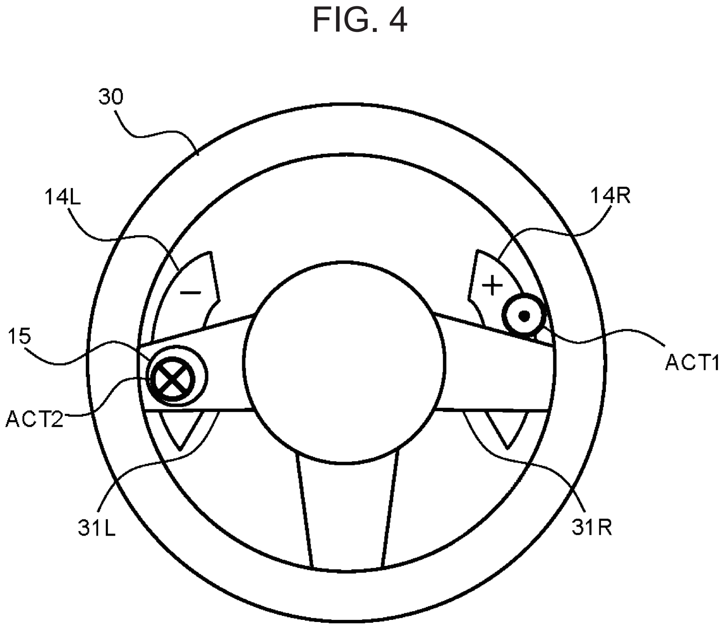

FIG. 4 illustrates a second embodiment of the operation interfaces to be used for switching between the automatic control mode and the manual operation mode. A difference between the second embodiment and the first embodiment lies in a position at which the mode switch button 15 is provided. In the second embodiment, the mode switch button 15 is provided on a front side of a left steering spoke 31L. More specifically, the mode switch button 15 is provided at a position that can be pressed by the driver with the thumb of the left hand while putting the left hand on the steering wheel 30.

In the second embodiment, the driver pulls the right paddle switch 14R toward himself/herself with the second to the fourth fingers of the right hand (ACT1) and presses the mode switch button 15 with the thumb of the left hand (ACT2). As a result of these kinds of operation being performed in a predetermined manner, switching from the automatic control mode to the manual operation mode or from the manual operation mode to the automatic control mode is implemented. In the second embodiment, the driver can perform the two kinds of operation ACT1, ACT2 with the both hands while putting the both hands on the steering wheel 30. Examples of a specific manner of the two kinds of operation ACT1, ACT2 are the same as those in the first embodiment.

Note that a positional relationship between the paddle switch and the mode switch button to be used as the operation interfaces for mode switching may be reverse to that illustrated in FIG. 4 with respect to the center of the steering wheel 30. In other words, the left paddle switch 14L may be used as one of the operation interfaces for mode switching, and the mode switch button 15 may be provided on a front side of a right steering spoke 31R.

### 4-3. Third Embodiment

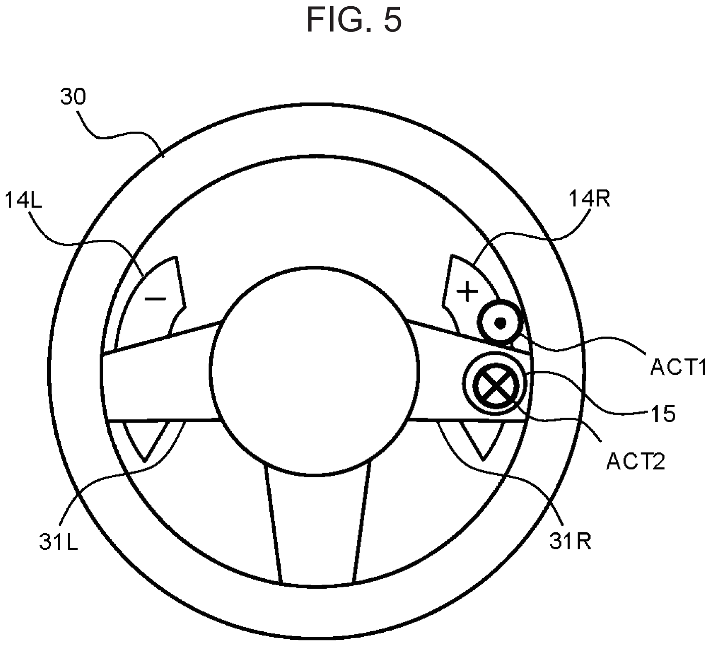

FIG. 5 illustrates a third embodiment of the operation interfaces to be used for switching between the automatic control mode and the manual operation mode. The third embodiment is a modification of the second embodiment, and a difference from the second embodiment lies in a position at which the mode switch button 15 is provided. In the third embodiment, the mode switch button 15 is provided on the front side of the right steering spoke 31R. More specifically, the mode switch button 15 is provided at a position that can be pressed by the driver with the thumb of the right hand while putting the right hand on the steering wheel 30.

In the third embodiment, the driver pulls the right paddle switch 14R toward himself/herself with the second to the fourth fingers of the right hand (ACT1) and presses the mode switch button 15 with the thumb of the right hand (ACT2). As a result of these kinds of operation being performed in a predetermined manner, switching from the automatic control mode to the manual operation mode or from the manual operation mode to the automatic control mode is implemented. In the third embodiment, the two kinds of operation ACT1, ACT2 can be performed with one hand while the both hands are put on the steering wheel 30. Examples of a specific manner of the two kinds of operation ACT1, ACT2 are the same as those in the first embodiment.

Note that a positional relationship between the paddle switch and the mode switch button to be used as the operation interfaces for mode switching may be reverse to that illustrated in FIG. 5 with respect to the center of the steering wheel 30. In other words, the left paddle switch 14L may be used as one of the operation interfaces, and the mode switch button 15 may be provided on the front side of the left steering spoke 31L.

### 4-4. Fourth Embodiment

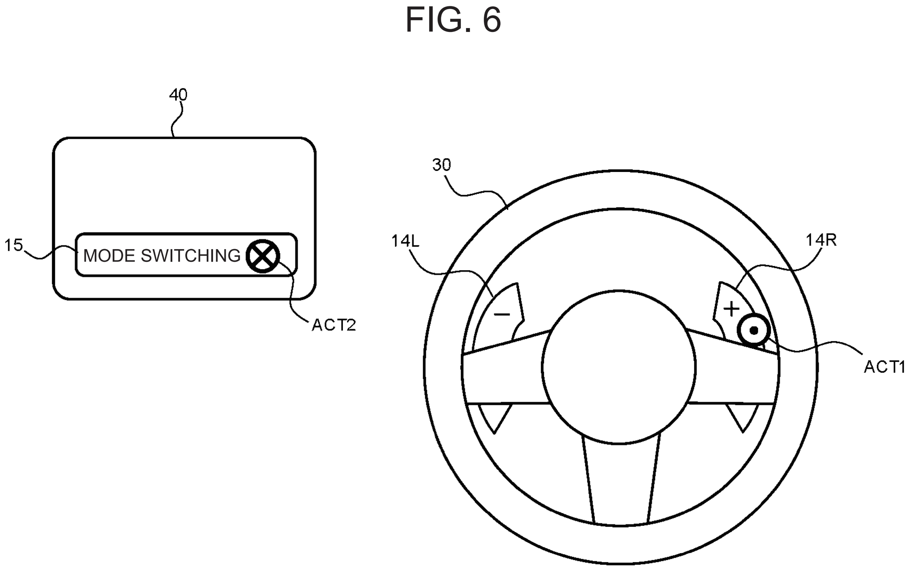

FIG. 6 illustrates a fourth embodiment of the operation interfaces to be used for switching between the automatic control mode and the manual operation mode. A difference between the fourth embodiment and the first embodiment lies in a type of the operation interface for mode switching. In the fourth embodiment, a touch panel type display 40 provided at a cockpit is used as an operation interface for mode switching different from the right paddle switch 14R. In other words, the mode switch button 15 is displayed on the touch panel type display 40 instead of a physical button being provided.

In the fourth embodiment, the driver pulls the right paddle switch 14R toward himself/herself with the second to the fourth fingers of the right hand (ACT1) and presses the mode switch button 15 displayed on the touch panel type display 40 with the finger of the left hand (ACT2). As a result of these kinds of operation being performed in a predetermined manner, switching from the automatic control mode to the manual operation mode or from the manual operation mode to the automatic control mode is implemented. In the second embodiment, the two kinds of operation ACT1, ACT2 can be performed using the both hands while one hand is put on the steering wheel 30. Examples of a specific manner of the two kinds of operation ACT1, ACT2 are the same as those in the first embodiment.

### 4-5. Fifth Embodiment

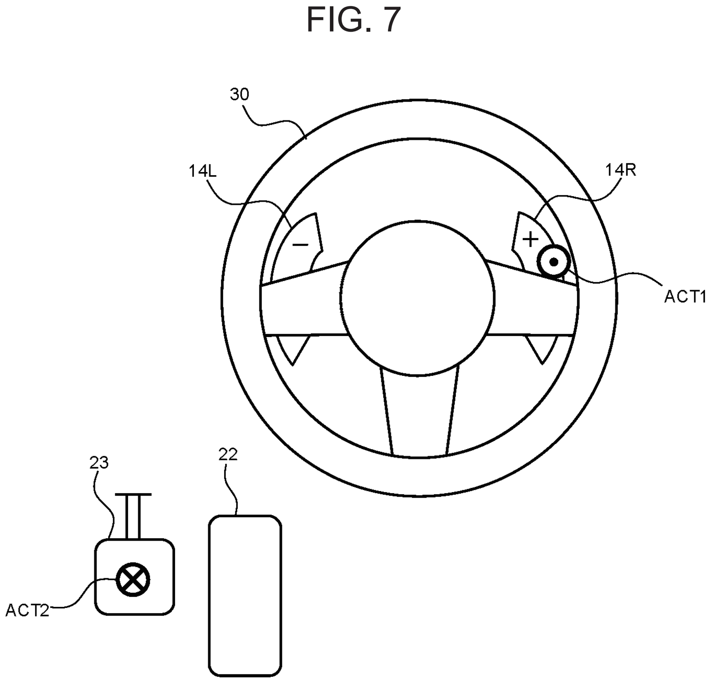

FIG. 7 illustrates a fifth embodiment of the operation interfaces to be used for switching between the automatic control mode and the manual operation mode. In the fifth embodiment, a brake pedal 23 is used as one of the operation interfaces in place of the mode switch button. The right paddle switch 14R is used as the other operation interface for mode switching. However, the left paddle switch 14L may be used as one of the operation interfaces for mode switching in place of the right paddle switch 14R.

In the fifth embodiment, the driver pulls the right paddle switch 14R toward himself/herself with the second to the fourth fingers of the right hand (ACT1) and presses the brake pedal 23 with the right foot (ACT2). As a result of these kinds of operation being performed in a predetermined manner, switching from the automatic control mode to the manual operation mode or from the manual operation mode to the automatic control mode is implemented. In the fifth embodiment, the two kinds of operation ACT1, ACT2 can be performed using one hand and one foot while the both hands are put on the steering wheel 30. Examples of a specific manner of the two kinds of operation ACT1, ACT2 are the same as those in the first embodiment. However, unlike with a case of the mode switch button from the first to the fourth embodiments, mode switching through the operation of the right paddle switch 14R and the brake pedal 23 is allowed only while the vehicle is stopped.

### 4-6. Sixth Embodiment

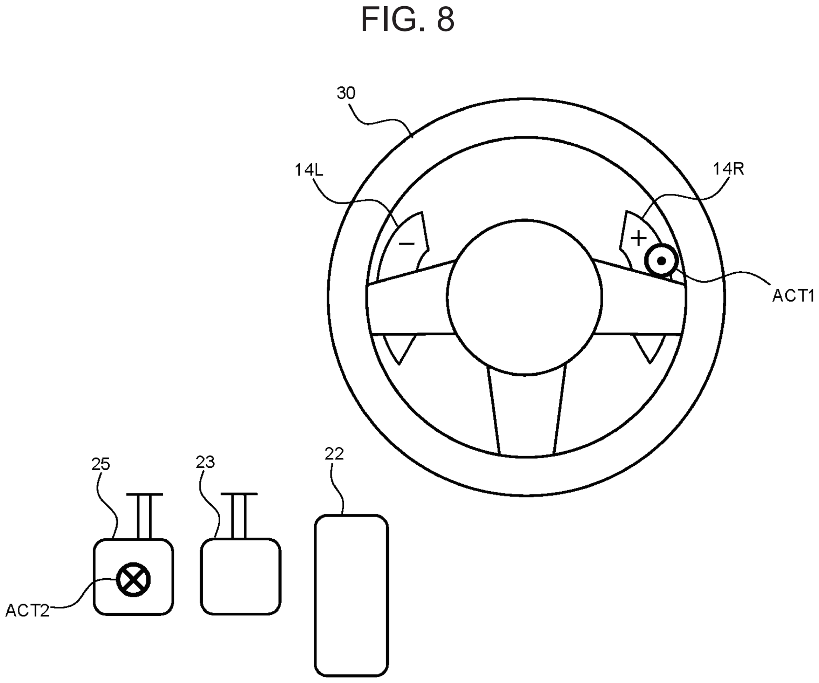

FIG. 8 illustrates a sixth embodiment of the operation interfaces to be used for switching between the automatic control mode and the manual operation mode. In the sixth embodiment, a foot pedal is used as one of the operation interfaces for mode switching in a similar manner to the fifth embodiment. The foot pedal to be used in the sixth embodiment is a pseudo clutch pedal 25. A clutch pedal stroke sensor is attached to the pseudo clutch pedal 25. In the sixth embodiment, in place of the virtual clutch operation amount, a clutch operation amount calculated from the clutch pedal stroke of the pseudo clutch pedal 25 is used to calculate the clutch model MOD12.

In the sixth embodiment, the driver pulls the right paddle switch 14R toward himself/herself with the second to the fourth fingers of the right hand (ACT1) and presses the pseudo clutch pedal 25 with the left foot (ACT2). As a result of these kinds of operation being performed in a predetermined manner, switching from the automatic control mode to the manual operation mode or from the manual operation mode to the automatic control mode is implemented. In the sixth embodiment, the two kinds of operation ACT1, ACT2 can be performed using one hand and one foot while the both hands are put on the steering wheel 30. Examples of a specific manner of the two kinds of operation ACT1, ACT2 are the same as those in the first embodiment. Mode switching through the operation of the right paddle switch 14R and the pseudo clutch pedal 25 can be performed also while the vehicle is traveling. In place of the right paddle switch 14R, the left paddle switch 14L may be used as one of the operation interfaces for mode switching.

### 4-7. Seventh Embodiment

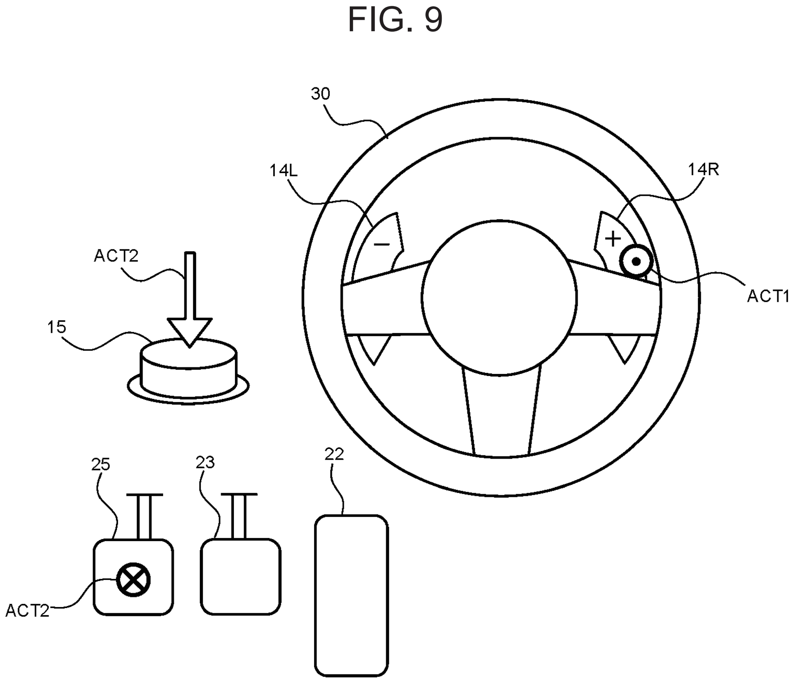

FIG. 9 illustrates a seventh embodiment of the operation interfaces to be used for switching between the automatic control mode and the manual operation mode. In the seventh embodiment, three operation interfaces of the right paddle switch 14R, the mode switch button 15 provided at the center console or the dashboard, and the pseudo clutch pedal 25 are used for mode switching. The mode switch button 15 is provided on the left side of the steering wheel 30.

In the seventh embodiment, the driver pulls the right paddle switch 14R toward himself/herself with the second to the fourth fingers of the right hand (ACT1), presses the mode switch button 15 with the finger of the left hand (ACT2), and presses the pseudo clutch pedal 25 with the left foot (ACT3). As a result of these kinds of operation being performed in a predetermined manner, switching from the automatic control mode to the manual operation mode or from the manual operation mode to the automatic control mode is implemented. In the seventh embodiment, the three kinds of operation ACT1, ACT2, ACT3 are performed using the both hands and one foot while one hand is put on the steering wheel 30. Examples of a specific manner of the three kinds of operation ACT1, ACT2, ACT3 includes executing the operation ACT2 and the operation ACT3 within a predetermined period after the operation ACT1 is executed, and executing the operation ACT2 and the operation ACT3 while the operation ACT1 is executed.

Note that as a modification of the seventh embodiment, a button provided at the steering wheel as in the second embodiment and the third embodiment may be used as the mode switch button 15. Further, a button displayed on the touch panel type display instead of the physical button may be used as the mode switch button 15. Still further, in place of the pseudo clutch pedal, the brake pedal may be used as the operation interface for mode switching.

### 4-8. Eighth Embodiment

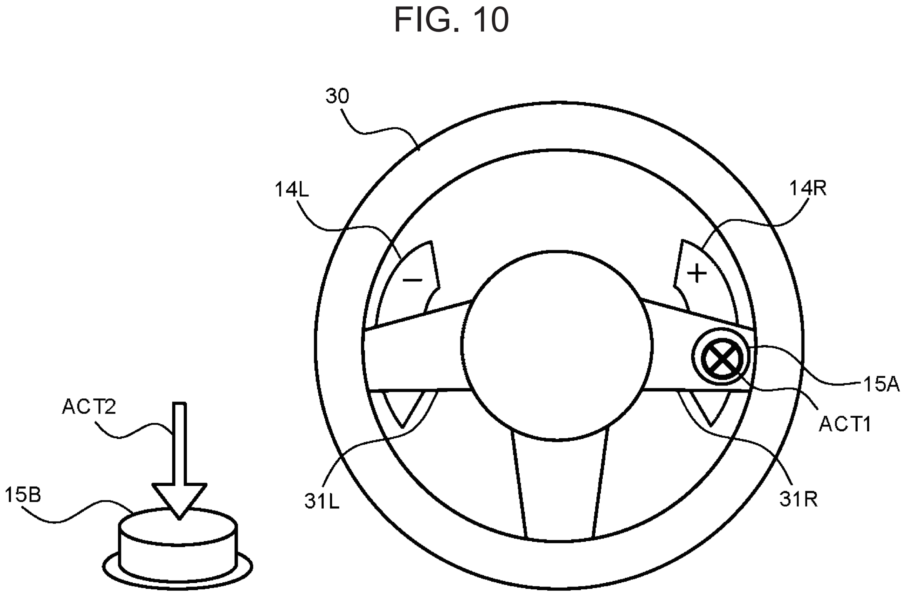

FIG. 10 illustrates an eighth embodiment of the operation interfaces to be used for switching between the automatic control mode and the manual operation mode. In the eighth embodiment, neither the right paddle switch 14R nor the left paddle switch 14L is used as the operation interfaces for mode switching. Instead, a first mode switch button 15A provided at the steering wheel 30, and a second mode switch button 15B provided at the center console or dashboard are used as the operation interfaces for mode switching. Specifically, the first mode switch button 15A is provided on the front side of the right steering spoke 31R, and the second mode switch button 15B is provided on the left side of the steering wheel 30.

In the eighth embodiment, the driver presses the first mode switch button 15A with the thumb of the right hand (ACT1) and presses the second mode switch button 15B with the finger of the left hand (ACT2). As a result of these kinds of operation being performed in a predetermined manner, switching from the automatic control mode to the manual operation mode or from the manual operation mode to the automatic control mode is implemented. In the seventh embodiment, the two kinds of operation ACT1, ACT2 can be performed while one hand is put on the steering wheel 30. Examples of a specific manner of the two kinds of operation ACT1, ACT2 include Example 1 and Example 2 in the first embodiment.

Note that as a modification of the eighth embodiment, instead of the physical button, a button displayed on the touch panel type display may be used as the second mode switch button 15B. Further, in place of the second mode switch button 15B, a foot pedal like the pseudo clutch pedal may be used as the operation interface for mode switching. In this case, the first mode switch button 15A may be provided on the front side of the left steering spoke 31L.

### 5. Others

A mode switching technology to be used in a battery electric vehicle in the present disclosure can be widely applied to battery electric vehicles having a manual operation mode configured to be able to switch output characteristics of a motor in multiple stages through operation of a shift lever, as well as a battery electric vehicle (BEV). For example, the mode switching technology of the present disclosure can be applied to a hybrid electric vehicle (HEV) and a plug-in hybrid electric vehicle (PHEV) having a mode in which the vehicle travels only with drive force of a motor. Further, the mode switching technology of the present disclosure can be also applied to a fuel cell electric vehicle (FCEV) that supplies electric energy generated by a fuel cell to a motor.

## Claims

1. A battery electric vehicle (100) having a plurality of modes in which output control of a motor (4F; 4R) with respect to an operation input from a driver is different, the battery electric vehicle (100) comprising a control device (101), wherein:
the modes include a manual operation mode in which output characteristics of the motor (4F; 4R) upon acceleration are switchable in multiple stages through operation of a pair of right and left switches (14R; 14L) provided at a steering wheel (30) or a steering column; and
the control device (101) is configured to execute mode switching between the manual operation mode and another mode by two or more operation interfaces being operated without at least one of the pair of right and left switches (14R; 14L) being operated.

2. The battery electric vehicle (100) according to claim 1, wherein the two or more operation interfaces are operation interfaces that are operable while the driver puts a hand on the steering wheel.

3. The battery electric vehicle (100) according to claim 1 or 2, wherein the two or more operation interfaces include one of the pair of right and left switches (14R; 14L).

4. The battery electric vehicle (100) according to any of claims 1 to 3, wherein the two or more operation interfaces are the one of the pair of right and left switches (14R; 14L) and an operation interface that is operable by the other hand different from the hand that operates the one of the pair of right and left switches (14R; 14L).

5. The battery electric vehicle (100) according to any of claims 1 to 4, wherein the control device (101) is configured to execute the mode switching by the one of the pair of right and left switches (14R; 14L) and an operation interface other than the pair of right and left switches (14R; 14L) being operated through a predetermined process.

6. The battery electric vehicle (100) according to any one of claims 1 to 5, wherein operation order of the two or more operation interfaces is common between modes to be switched.

7. The battery electric vehicle (100) according to any one of claims 1 to 6, wherein the modes include a regenerative characteristics variable mode in which regenerative characteristics of the motor (4F; 4R) upon deceleration are switchable in multiple stages through operation of the pair of right and left switches (14R; 14L).

8. The battery electric vehicle (100) according to any one of claims 1 to 7, wherein the pair of right and left switches (14R; 14L) is a paddle switch.

9. A non-transitory storage medium (103) storing instructions that are executable by a computer (101) mounted on a battery electric vehicle (100) including a pair of right and left switches (14R; 14L) provided at a steering wheel (30) or a steering column, the instructions causing the computer (101) to execute functions comprising:
making a plurality of modes selectable in the battery electric vehicle (100), the modes being modes in which output control of a motor (4F; 4R) with respect to an operation input from a driver is different, the modes including a manual operation mode in which output characteristics of the motor (4F; 4R) upon acceleration are switchable in multiple stages through operation of the pair of right and left switches (14R; 14L); and
executing mode switching between the manual operation mode and another mode when two or more operation interfaces are operated without at least one of the pair of right and left switches (14R; 14L) being operated.
